(19) Europäisches Patentamt
European Patent Office
Office européen des brevets

(11) Veröffentlichungsnummer: **0 415 302 A2**

# (12) EUROPÄISCHE PATENTANMELDUNG

(21) Anmeldenummer: **90116336.0**

(22) Anmeldetag: **27.08.90**

(51) Int. Cl.5: **C08F 283/00**, C08F 299/06, C09D 151/08

(30) Priorität: **31.08.89 DE 3928825**

(43) Veröffentlichungstag der Anmeldung: **06.03.91 Patentblatt 91/10**

(84) Benannte Vertragsstaaten: **DE FR GB IT NL**

(71) Anmelder: **HOECHST AKTIENGESELLSCHAFT**
**Postfach 80 03 20**
**W-6230 Frankfurt am Main 80(DE)**

(72) Erfinder: **Müller-Hess, Waltraud, Dr.**
**Lärchenstrasse 4**
**W-6200 Wiesbaden(DE)**
Erfinder: **Mohr, Dieter, Dr.**
**Eubonner Strasse 8**
**W-6501 Budenheim(DE)**
Erfinder: **Kroggel, Matthias, Dr.**
**Am Flachsland 15**
**W-6233 Kelkheim(DE)**

## (54) Pfropfpolymerisat mit ungesättigten Seitenketten, dieses enthaltendes lichtempfindliches Gemisch sowie daraus hergestelltes Aufzeichnungsmaterial.

(57) Es wird ein lichthärtbares Gemisch beschrieben, das zur Herstellung von Druckplatten, insbesondere Flachdruckplatten, und Photoresists geeignet ist. Das Gemisch enthält ein pfropfpolymerisat aus einem Polyurethan als pfropfgrundlage und aufgepfropften Ketten, die Vinylalkoholeinheiten und Einheiten mit seitenständigen Styrylpyridinium- oder Styrylchinoliniumgruppen enthalten, sowie eine lichtempfindliche Verbindung, wie einen Photosensibilisator oder eine negativ arbeitende Diazoverbindung.

Das Gemisch ergibt Druckplatten mit hoher Lichtempfindlichkeit, guter Entwickelbarkeit mit wäßrigen Lösungen und hoher Druckauflage.

EP 0 415 302 A2

# PFROPFPOLYMERISAT MIT UNGESÄTTIGTEN SEITENKETTEN, DIESES ENTHALTENDES LICHTEMPFINDLICHES GEMISCH SOWIE DARAUS HERGESTELLTES AUFZEICHNUNGSMATERIAL

Die Erfindung betrifft ein Pfropfpolymerisat mit ethylenisch ungesättigten, vernetzbaren Seitenketten und ein lichthärtbares, mit wäßrigen Lösungen entwickelbares Gemisch, das das Pfropfpolymerisat und eine lichtempfindliche Substanz enthält. Das Gemisch ist zur Herstellung von lichtempfindlichen Aufzeichnungsmaterialien, insbesondere von Flachdruckplatten und Photoresists, geeignet.

Lichtempfindliche Gemische, die Polyvinylalkohole mit lichtvernetzbaren Seitengruppen enthalten, sind bekannt. In der US-A 4 272 620 wird ein Polyvinylalkohol mit seitenständigen Styrylpyridiniumgruppen beschrieben, der sich durch hohe Wasserlöslichkeit und hohe Lichtempfindlichkeit auszeichnet. Er eignet sich für die Herstellung von Schutzschichten und Siebdruckschablonen. In der US-A 4 339 524 werden lichtempfindliche Harze, die insbesondere zur Herstellung von Leuchtschirmen oder Fluoreszenzschirmen von Kathodenstrahlröhren geeignet sind, beschrieben. Es handelt sich um teilverseifte Polyvinylacetate, die neben acetalartig gebundenen Stilbazoliumgruppen (= Styrylpyridiniumgruppen) auch einfache Acetalgruppen tragen. In der EP-A 0 130 804 wird ein lichtempfindliches Gemisch beschrieben, das ein wasserlösliches verseif tes Polyvinylacetat mit Styrylpyridinium- oder -chinoliniumgruppen, ein wasserdispergierbares Polymeres, eine polymerisierbare ungesättigte Verbindung und einen Photoinitiator enthält. Die Komponenten werden zu einer wäßrigen Emulsion oder Dispersion verarbeitet und zur Herstellung von Druckplatten, speziell von Siebdruckschablonen verwendet. Schließlich wird auch in der EP-A 25 210 ein lichtempfindliches Gemisch beschrieben, das einen mit Styrylpyridinium- bzw. -chinoliniumgruppen umgesetzten Polyvinylalkohol enthält und zur Herstellung von Siebdruckschablonen besonders geeignet ist.

Die in den genannten Anmeldungen beschriebenen Harze zeichnen sich durch eine hohe Lichtempfindlichkeit aus; sie haben jedoch den Nachteil, daß sie aufgrund ihrer geringen Wasserresistenz beim Entwickeln mit wäßrigen Lösungen auch in den durchgehärteten Bereichen quellen, wodurch die Auflösung stark beeinträchtigt wird.

Dieser Nachteil kann nicht durch eine Erhöhung der Vernetzungsdichte beseitigt werden, da der Einbau von zusatzlichen Styrylpyridinium- oder -chinoliniumgruppen zum einen eine Viskositätserhöhung in dem Umfang bewirkt, daß z. B. die Beschichtung einer Aluminiumfolie nicht mehr möglich ist. Zum anderen wird die Wasserresistenz nicht in ausreichendem Maße erhöht. Dies kann auf die Anwesenheit der quartären Ammoniumsalzgruppen zurückgeführt werden oder darauf, daß der photodimerisierungsgrad nicht beliebig durch eine Erhöhung der potentiellen Vernetzungsstellen gesteigert werden kann.

In der DE-A 37 32 089 werden Pfropfpolymerisate beschrieben, die aus einem Polyurethan als Pfropfgrundlage und aufgepfropften Vinylestereinheiten bestehen, die mindestens teilweise zu Vinylalkoholeinheiten verseift sind. Die Polieren werden als Bindemittel für Pigmente, zur Herstellung von Druckfarben, von Schmelzklebern, von lösemittelhaltigen Klebstoffen, als Bestandteil von Lacken oder Beschichtungsmitteln für Fasern, Folien und Metalle und für thermoplastische Formkörper eingesetzt.

In der älteren deutschen patentanmeldung P38 35 840.9 werden Pfropfpolymerisate beschrieben, die aus den in der DE-A 37 32 089 beschriebenen Pfropfpolymerisaten durch Acetalisieren mit gesättigten aliphatischen oder aromatischen Aldehyden erhalten werden.

In der älteren deutschen patentanmeldung P 39 20 229.1 werden photopolymerisierbare Gemische beschrieben, die als Bindemittel die in der P 38 35 840.9 beschriebenen Pfropfpolyvinylacetale enthalten.

In der älteren deutschen patentanmeldung P 39 24 811.9 werden lichthärtbare Pfropfpolymere beschrieben, die aus den Polymeren gemäß DE-A 37 32 089 durch Umsetzen mit aktivierten Derivaten von Verbindungen mit end ständigen Vinyl- oder Vinylidengruppen, z. B. Derivaten von Acryl- oder Methacrylsäure, erhalten werden. Diese lichthärtbaren Polymeren werden in Kombination mit Photoinitiatoren und ggf. radikalisch polymerisierbaren niedermolekularen Verbindungen zur Herstellung von Druckplatten oder Photoresists eingesetzt.

Der vorliegenden Erfindung lag die Aufgabe zugrunde, durch Belichten vernetzbare Polymere und diese Polymere enthaltende lichthärtbare Gemische für die Herstellung von Druckplatten, besonders Flachdruckplatten, und Photoresists bereitzustellen, die sich nach bildmäßiger Belichtung mit Wasser oder wäßrigen Lösungen entwickeln lassen und die im belichteten Zustand eine hohe Beständigkeit gegenüber wäßrigen Verarbeitungslösungen aufweisen. Die Gemische und daraus herzustellende Aufzeichnungsmaterialien sollten ferner einfach herstellbar sein, eine höhere Lichtempfindlichkeit als bekannte, analog aufgebaute Materialien haben, hohe Bildauflösung und hohe Druckauflagen ergeben.

Erfindungsgemäß wird ein Pfropfpolymerisat vorgeschlagen, das aus einem Polyurethan als Pfropfgrundlage und aufgepfropften Ketten besteht, die Vinylalkoholeinheiten und Einheiten mit seitenständigen Styrylpyridinium-oder Styrylchinoliniumgruppen enthalten.

Erfindungsgemäß wird ferner ein lichthärtbares Gemisch vorgeschlagen, das als wesentliche Bestandteile ein Polymeres mit ethylenisch ungesättigten vernetzbaren Seitenketten und eine lichtempfindliche Substanz enthält.

Das erfindungsgemäße Gemisch ist dadurch gekennzeichnet, daß das Polymere ein Pfropfpolymerisat der vorstehend angegebenen Zusammensetzung ist.

Erfindungsgemäß wird schließlich auch ein lichthärtbares Aufzeichnungsmaterial mit einem Schichtträger und einer lichtempfindlichen Aufzeichnungsschicht vorgeschlagen, das dadurch gekennzeichnet ist, daß die Schicht aus einem Gemisch der vorstehend angegebenen Zusammensetzung besteht.

Die erfindungsgemäßen Pfropfmischpolymerisate sind neu. Zu ihrer Herstellung wird auf eine Pfropfgrundlage aus einem Polyurethan ein Carbonsäurevinylester und ggf. eine weitere damit copolymerisierbare ethylenisch ungesättigte Verbindung aufgepfropft und danach ganz oder teilweise verseift. Die dabei erhaltenen Polymeren mit Vinylalkoholeinheiten, die aus der DE-A 37 32 089 bekannt sind, werden weiter mit aktivierten Verbindungen, die Styrylpyridinium- oder Styrylchinoliniumgruppen enthalten, zu den erfindungsgemäßen Verbindungen umgesetzt. Vor oder nach der Einführung der lichtvernetzbaren Gruppen kann das Polymere mit gesättigten aliphatischen oder aromatischen Aldehyden, die keine lichtvernetzbaren Gruppen enthalten, acetalisiert werden.

Die Pfropfgrundlagen bestehen aus Polyurethanen mit mindestens zwei Urethangruppen im Molekül, wobei die Anzahl der Urethangruppen pro Molekül nach oben keiner besonderen Begrenzung unterliegt und im allgemeinen höhere Werte als 2 hat.

Die als Pfropfgrundlage eingesetzten Polyurethane lassen sich nach üblichen Verfahren der Polyurethansynthese aus Diolen und Diisocyanaten herstellen. Bevorzugt werden cycloaliphatische Diole, wie Cyclohexandiole, sowie insbesondere aliphatische Diole mit 2 bis 12 C-Atomen. Bevorzugt werden ferner Polyetherdiole, z. B. Polypropylenoxide, Polybutylenoxide, Mischpolymere aus Ethylenoxid, Propylenoxid, Butylenoxid, vorzugsweise deren Blockcopolymere, oder Poly1,4-butandiole; bevorzugt werden Polyethylenoxide, besonders solche mit Molekulargewichten zwischen 200 und 10 000, insbesondere zwischen 400 und 1500. Die Polyetherdiole werden mit Vorteil in Kombination mit niedermolekularen aliphatischen Diolen, z. B. 1,4-Butandiol, 1,3-Propandiol, Ethylenglykol, Diethylenglykol, 1,2-Hexandiol, 1,2-Propandiol, Pentandiol oder Cyclohexandiol eingesetzt. Bevorzugt liegt ein molares Verhältnis von Polyetherdiol zu niedermolekularem aliphatischem Diol von 1 : 0,1 bis 1 : 0,7 vor.

Als Diisocyanatkomponenten können aromatische Diisocyanate eingesetzt werden. Bevorzugt werden aliphatische und/oder cycloaliphatische Diisocyanate. Bevorzugte aliphatische Diisocyanate sind solche mit 2 bis 12 C-Atomen im aliphatischen Rest, z. B. Ethylendiisocyanat, Propylendiisocyanat, Tetramethylendiisocyanat, 2,2,4-Trimethyl-hexamethylendiisocyanat. Bevorzugte cycloaliphatische Diisocyanate sind z. B. 1,4-Diisocyanato-cyclohexan, Dicyclohexylmethan-4,4′-diisocyanat und Isophorondiisocyanat. Besonders bevorzugt werden Hexamethylendiisocyanat und Isophorondiisocyanat.

Das Molverhältnis von Diol- zu Diisocyanatkomponente liegt vorzugsweise zwischen 1 : 0,99 und 1 : 0,5, insbesondere zwischen 1 : 0,98 und 1 : 0,7. Die mittleren Molekulargewichte der Polyurethane liegen vorzugsweise zwischen 200 und 100 000, insbesondere zwischen 1 000 und 50 000, besonders bevorzugt zwischen 3 000 und 25 000.

Zum Pfropfen auf das Polyurethan werden Carbonsäurevinylester mit 3 bis 20, vorzugsweise 4 bis 14 C-Atomen eingesetzt. Besonders bevorzugt werden Vinylacetat und/oder Vinylpropionat, insbesondere Vinylacetat. Bevorzugt werden ferner Gemische aus Vinylacetat und/oder Vinylpropionat und Vinylversatat. Insbesondere bei Teil- oder Vollverseifung der Produkte im Anschluß an die Pfropfpolymerisation ist beim Pfropfen die Mitverwendung von Vinylpropionat neben Vinylacetat vorteilhaft. Außerdem lassen sich copolymerisierbare Gemische aus Vinylcarbonsäureestern pfropfen, vorzugsweise Gemische aus Vinylacetat und kleineren Mengen Vinylversatat.

Auch das Pfropfen mit verschiedenen Carbonsäurevinylestern in Form von Blockcopolymeren kann vorteilhaft sein. Weiterhin können die Carbonsäurevinylester auch zusammen mit anderen ethylenisch ungesättigten und copolymerisierbaren Monomeren, insbesondere Säuren, wie Maleinsäure, Itaconsäure, Mesaconsäure, Crotonsäure, Acrylsäure, oder deren Estern, gepfropft werden.

Der Mengenanteil der aufgepfropften Komponenten beträgt im allgemeinen 10 bis 95, vorzugsweise 30 bis 90 und insbesondere 40 bis 80 Gew.-%, bezogen auf das gesamte Pfropfpolymerisat.

Die erhaltenen Pfropfpolymerisate lassen sich durch Hydrolyse, Alkoholyse oder Umesterung verseifen, wobei der Hydrolysegrad mindestens 30 mol-%, vorzugsweise 45 bis 99 mol-%, bezogen auf die Molzahl verseifbarer Monomereinheiten im Pfropfpolymerisat, beträgt. Die Herstellung der Pfropfpolymerisate mit Polyurethan-Pfropfgrundlage und ihre Verseifung ist in der DE-A 37 32 089 beschrieben.

Die Einführung der lichtvernetzbaren Seitengruppen kann durch Umsetzung der freien OH-Gruppen des Pfropfpolymeren in jeder beliebigen und bekannten Art und Weise erfolgen. Für den erfindungsgemäßen

Einsatz haben sich jedoch diejenigen Polymeren als besonders günstig erwiesen, in die die Seitengruppen durch Acetalisierung eingeführt worden sind.

Die erfindungsgemäßen Polymeren enthalten vorzugsweise Struktureinheiten der allgemeinen Formel I

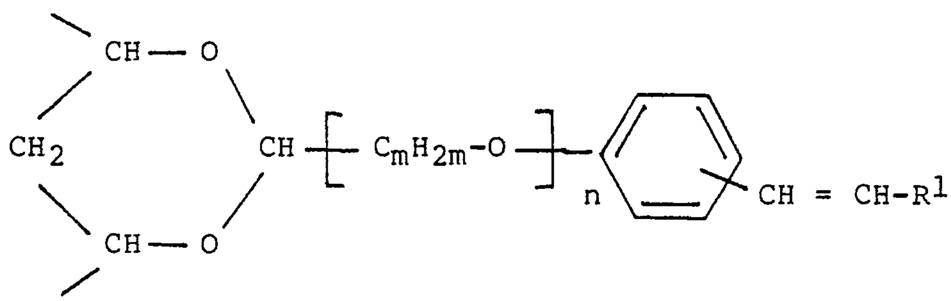

(I)

worin

$R^1$ eine der Gruppen

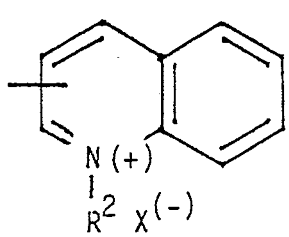

und

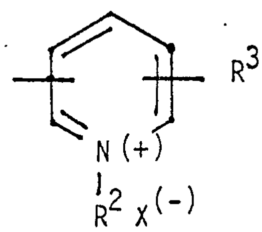

m eine Zahl von 1 bis 6,

n 0 oder 1,

$R^2$ H oder eine Alkyl-, Alkenyl- oder Aralkylgruppe,

$R^3$ H oder eine Alkylgruppe und

X das Anion der Stickstoffbase bedeutet.

In den Gruppen $R^1$ kann der Styrylrest vorzugsweise in 2- oder 4-Stellung, besonders in der 4-Stellung, in bezug auf das Stickstoffatom des Heterocyclus stehen.

Der Begriff "Alkylgruppe" steht für einen einwertigen, geradkettigen oder verzweigten, aliphatischen Kohlenwasserstoffrest mit 1 bis 6 Kohlenstoffatomen. "Substituierte Alkylgruppe" steht für eine Alkylgruppe der oben definierten Art, die einen Substituenten, wie eine Hydroxylgruppe, eine Carbamoylgruppe, eine Alkoxygruppe oder dgl., trägt.

"Alkenylgruppe" steht für einen geradkettigen oder verzweigten aliphatischen Kohlenwasserstoffrest mit einer Doppelbindung und 2 bis 6 Kohlenstoffatomen, vorzugsweise 2 bis 4 Kohlenstoffatomen. "Aralkylgruppe" steht für eine mit einem aromatischen Ring substituierte Alkylgruppe und umfaßt insbesondere die Benzylgruppe.

Die lichtvernetzbaren Gruppen der Formel (I) werden durch Acetalisierung der Pfropfpolyvinylalkohole mit Aldehyden, die der Einheit der Formel I zugrundeliegen, oder deren Dimethyl- oder Diethylacetalen in die Polymeren eingeführt.

Die Einführung der lichtvernetzbaren Gruppen wird vorteilhaft unter Einsatz einer Säure als Katalysator in Wasser oder N-Methylpyrrolidon als Reaktionsmedium durchgeführt.

Als Katalysator für diese Reaktion kann jede anorganische oder organische Säure dienen. Spezielle Beispiele für derartige Säuren sind Salzsäure, Schwefelsäure, Phosphorsäure, Perchlorsäure, Tetrafluoroborsäure, Methansulfonsäure und p-Toluolsulfonsäure. Da die Reaktionszeit mit zunehmender Menge an Säure als Katalysator abnimmt, wird diese Säuremenge möglichst groß gewählt. In der Praxis genügen jedoch im allgemeinen 0,01 bis 5 Äquivalente Säure je mol Aldehyd. Die Reaktion wird bei Temperaturen von Raumtemperatur bis zu 100 °C durchgeführt. Die Reaktionszeit liegt zwischen einer und 24 Stunden.

Beispiele für die zur Herstellung der erfindungsgemäßen Polymeren eingesetzten ungesättigten Aldehyde sind im folgenden aufgelistet:

1-Methyl-2-(p-formylstyryl)pyridinium-,

1-Methyl-4-(p-formylstyryl)pyridinium-,

1-Ethyl-4-(p-formylstyryl)pyridinium-,
1-Propyl-4-(p-formylstyryl)pyridinium-,
1-Isopropyl-4-(p-formylstyryl)pyridinium-,
1-Butyl-4-(p-formylstyryl)pyridinium-,
1-Hexyl-4-(p-formylstyryl)pyridinium-,
1-Methyl-2-(p-formylstyryl)-5-methyl-pyridinium-,
1-Methyl-4-(p-formylstyryl)-5-ethyl-pyridinium-,
1-Ethyl-4-(p-formylstyryl)-4-methyl-pyridinium-,
1-(2-Hydroxyethyl)-4-(p-formylstyryl)pyridinium-,
1-Carbamoylmethyl-2-(p-formylstyryl)pyridinium-,
1-Allyl-4-(p-formylstyryl)pyridinium-,
1-Benzyl-4-(p-formylstyryl)pyridinium-,
1-Benzyl-2-(p-formylstyryl)-5-methyl-pyridinium-,
1-Benzyl-4-(p-formylstyryl)-3-ethyl-pyridinium-,
1-Methyl-2-(p-formylstyryl)chinolinium und
1-Ethyl-4-(p-formylstyryl)chinoliniumsalze.

Geeignete Acetale leiten sich von den vorstehend genannten Formylverbindungen ab, z. B.
1-Methyl-2-[p-(2,2-dimethoxyethoxy)styryl]pyridinium-,
1-Methyl-2-[o-(2,2-dimethoxyethoxy)styryl]pyridinium-,
1-Methyl-2-[m-(2,2-dimethoxyethoxy)styryl]pyridinium-,
1-Methyl-4-[p-(2,2-dimethoxyethoxy)styryl]pyridinium-,
1-Propyl-4-[p-(2,2-dimethoxyethoxy)styryl]pyridinium-,
1-Benzyl-4-[p-(2,2-dimethoxyethoxy)styryl]pyridinium-,
1-Methyl-4-[p-(4,4-dimethoxybutoxy)styryl]pyridinium-,
1-Methyl-4-[p-(2,2-ethylendioxy)styryl]pyridinium und
1-Methyl-4-[p-(2,2-dimethoxyethoxy) styryl] -3-ethyl-pyridiniumsalze.

Die quartären Salze können in Form von Halogeniden, wie Chloriden, Bromiden und Jodiden, von Sulfaten, Methosulfaten, p-Toluolsulfonaten, Methansulfonaten, Perchloraten und dergleichen vorliegen.

Die ungesättigten Aldehyde werden durch Kondensieren der entsprechenden Picoline oder N-Alkylpicoliniumsalze bzw. der Alkylchinoline oder N-Alkyl-alkylchinoliniumsalze mit aromatischen Dialdehyden, z. B. Formylbenzaldehyd, hergestellt und in Form von

Formylstyrylpyridinium- bzw. -chinoliniumsalzen eingesetzt. Die Dialkylacetale werden durch Kondensieren der entsprechenden N-Alkylpicoliniumsalze bzw. N-Alkyl-alkylchinoliniumsalze mit dem Formylphenoxyacetal hergestellt.

Die Einführung der lichtvernetzbaren Gruppen kann unmittelbar im Anschluß an die Verseifung der Carbonsäureestergruppen oder nach einer Acetalisierung mit einfachen, gesättigten Aldehyden stattfinden.

Zu dieser Acetalisierung werden aliphatische $C_1$- bis $C_{20}$-Aldehyde, die substituiert sein können, und aromatische Aldehyde, die ebenfalls substituiert sein können, eingesetzt. Bevorzugt werden aliphatische Aldehyde mit 1-5 C-Atomen, z. B. n-Butyraldehyd, Isobutyraldehyd, Propionaldehyd oder Formaldehyd. Ggf. substituierte Benzaldehyde, z. B. Benzaldehyd, p-Chlorbenzaldehyd oder p-Methoxy-benzaldehyd, sind ebenfalls geeignet. Es können auch Kombinationen dieser Aldehyde untereinander verwendet werden. Die Hydroxylzahl des fertigen vernetzbaren Polymeren sollte im Bereich von 100 bis 600, vorzugsweise von 200 bis 500 liegen.

Die Acetalisierung kann nach zwei Verfahren erfolgen. Bei der ersten Ausführungsform wird das Pfropfpolymere in einem Alkohol oder Wasser-Alkohol-Gemisch gelöst oder dispergiert, mit einer katalytischen Menge einer anorganischen oder organischen Säure und einem Aldehyd oder Aldehydgemisch versetzt und erwärmt. Das Polymere kann durch Eintropfen in einen Nichtlöser ausgefällt und gereinigt werden.

Bei der zweiten Ausführungsform wird das Pfropfpolymere in Wasser gelöst und mit einem Aldehyd oder Aldehydgemisch versetzt. Dann wird bei niedriger Temperatur eine wäßrige Lösung einer anorganischen oder starken organischen Säure zugetropft. Dabei fällt das acetalisierte Pfropfpolymere häufig aus. Die Reaktion wird bei erhöhter Temperatur (etwa 20 - 60 °C) vervollständigt. Das isolierte Polymere wird durch Waschen mit Wasser oder durch Umfällen gereinigt.

Die Umsetzung der Pfropfpolyvinylalkohole zu Pfropfpolyvinylacetalen ist in den älteren deutschen Patentanmeldungen P 38 35 840.9 und P 39 20 229.1 beschrieben.

Zusätzlich können noch andere gesättigte Seitenketten in das Polymere eingeführt werden. Solche Reste lassen sich durch Veretherung oder Umesterung einführen. Beispielsweise ist es möglich, durch Acylierung der Vinylalkoholeinheiten mit aktivierten Derivaten von zwei- oder mehrbasigen Carbonsäuren,

wie Bernsteinsäureanhydrid oder Phthalsäureanhydrid, unter Bildung der Partialester dieser mehrbasigen Säuren Polymere mit Seitenketten herzustellen, die freie Carboxylgruppen enthalten. Die Einführung von Alkalilöslichkeit vermittelnden Gruppen kann auch durch Umsetzung von OH-Gruppen des Polymeren mit Sulfonylisocyanaten nach bekannten Methoden erfolgen.

Weiterhin können Reste mit olefinisch ungesättigten Doppelbindungen, wie Acrylat- oder Methacrylatgruppen, durch Veresterung, Veretherung oder Urethanbildung, eingeführt werden.

Veretherungen können mit Hydroxyalkyl(meth)acrylaten) N-Alkylol(meth)acrylaten oder auch (Meth)-acrylaten mit Oxiranringen durchgeführt werden. Zur Urethanbildung werden bevorzugt Isocyanatoalkyl-(meth)acrylate eingesetzt) und Veresterungen werden hauptsächlich mit ungesättigten Carbonsäureanhydriden oder -halogeniden, wie (Meth)acrylsäureanhydrid oder (Meth)acrylsäurechlorid, durchgeführt.

Die lichtvernetzbaren Gruppen werden bevorzugt gleichzeitig mit den gesättigten Acetalgruppen ins Pfropfpolymere eingeführt. Hierzu wird der Pfropfpolyvinylalkohol bevorzugt in Wasser gelöst (N-Methylpyrrolidon wird als Lösungsmittel verwendet, falls von einem wasserunlöslichen Pfropfpolymeren ausgegangen wird) und ggf. mit einem Antioxidationsmittel und einem Netzmittel versetzt. Zu dieser Lösung gibt man das Styrylpyridinium- oder -chinoliniumsalz und die Katalysatorsäure und rührt eine Stunde bei Raumtemperatur und zwei Stunden bei 40 °C. Nach Abkühlen auf Raumtemperatur wird mit dem $C_1$- bis $C_{20}$-Aldehyd versetzt. Zu dieser Mischung wird weitere Katalysatorsäure in Form einer wäßrigen Lösung getropft. Die Reaktion wird bei erhöhter Temperatur vervollständigt.

Das Fortschreiten der Reaktion des Pfropfpolyvinylalkohols mit dem lichtempfindlichen Salz kann durch Ausfällen des Polymeren in einem Nichtlöser und Bestimmen der durch die lichtempfindliche Gruppe hervorgerufenen Absorption verfolgt werden.

Die bei der Synthese anfallenden Polymerlösungen können direkt in die erfindungsgemäßen Gemische eingebaut werden. Um die Acetalbindung zu stabilisieren, empfiehlt es sich, die Lösung mit Hilfe einer Base (z. B. Ammoniak) neutral zu stellen. Das Polymere kann auch durch Eintropfen in einen Nichtlöser ausgefällt und gereinigt werden.

Die erfindungsgemäßen Polymeren enthalten im allgemeinen 0,5 bis 50, vorzugsweise 1 bis 20 mol-% an Einheiten mit Gruppen der Formel I, 0 bis 85, vorzugsweise 0 bis 70 mol-%, an Vinylacetaleinheiten, 0 bis 45, vorzugsweise 1 bis 25 mol-%, an Vinylestereinheiten von gesättigten aliphatischen oder aromatischen Carbonsäuren und 5 bis 90, vorzugsweise 10 bis 70 mol-%, an Vinylalkoholeinheiten. Die Angaben in mol-% beziehen sich auf den Gehalt des Polymeren an aufgepfropften Einheiten.

Die lichtempfindlichen Gemische enthalten im allgemeinen 20 bis 98, bevorzugt 25 bis 80 Gew.-% der erfindungsgemäßen Polymeren, bezogen auf das Gewicht der nichtflüchtigen Bestandteile des Gemischs. Sie können ferner 0 bis 80, bevorzugt 0 bis 50 Gew.-% an herkömmlichen gesättigten Bindemitteln enthalten. Als Beispiele seien genannt:

Polyamide, Polyvinylester, Polyvinylacetale, Polyvinylether, Epoxidharze, Polyacrylsäureester, Polymethacrylsäureestor, Polyester, Alkydharze, Polyacrylamide, Polyvinylalkohole, Polyethylenoxide, Polydimethylacrylamid, Polyvinylpyrrolidon, Polyvinylmethylformamid, Polyvinylmethylacetamid sowie Mischpolymerisate der Monomeren, die die aufgezählten Homopolymerisate bilden.

Mit Vorteil sollten auch diese Bindemittel wasserunlöslich, aber in wäßrig-alkalischen Lösungen löslich oder mindestens quellbar sein. Beispiele für derartige Polymere sind: Maleinatharze, Polymerisate aus N-(p-Tolylsulfonyl)-carbaminsäure-$\beta$-(methacryloyloxy)-ethylester und Mischpolymerisate dieser und ähnlicher Monomerer mit anderen Monomeren sowie Vinylacetat/Crotonsäure-und Styrol/Maleinsäureanhydrid-Mischpolymerisate, Alkylmethacrylat/Methacrylsäure-Mischpolymerisate und Mischpolymerisate aus Methacrylsäure, höheren Alkylmethacrylaten und Methylmethacrylat und/oder Styrol, Acrylnitril u.a.

Aus den erfindungsgemäßen Polymeren können bereits ohne Zusatz weiterer lichtempfindlicher Substanzen lichtempfindliche Aufzeichnungsmaterialien hergestellt werden. Die Lichtempfindlichkeit derartiger Systeme ist allerdings relativ gering.

Die einfachste Möglichkeit, ein praxisgerecht funktionierendes Aufzeichnungsmaterial herzustellen, besteht darin, dem Polymeren einen Sensibilisator zuzusetzen.

Vorteilhafte Sensibilisierungsmittel für die erfindungsgemäßen Polymeren sind Anthrone, z. B. die aus der US-A 2 670 285 bekannten Anthrone; Benzanthrone, Sensibilisierungsmittel vom Nitrotyp, z. B. die aus der US-A 2 610 120 bekannten Sensibilisierungsmittel; Triphenylmethane, wie sie aus der US-A 2 690 966 bekannt sind; Chinone, wie sie in der US-A 2 670 286 beschrieben sind; Naphthone; Pyrylium- und Thiapyryliumsalze, wie sie beispielsweise in der US-A 3 257 664 beschrieben sind; Furanone, Anthrachinone; Thiazole und Selenazole, wie sie aus der US-A 2 732 301 bekannt sind; Thiazoline, Benzothiazolin; Naphthothiazolin; Cyaninfarbstoffe, die sich von Thiazolen, Benzthiazolen, Benzoselenazolen, Naphthothiazolen und Benzoxazolen ableiten und in der US-A 2 732 301 oder FR-A 10 89 290 beschrieben sind; sowie Acridone, wie sie in der US-A 3 072 485 beschrieben werden.

Auch strahlungsempfindliche Sensibilisierungsmittel, d.h. solche, die durch Strahlung verändert werden, z. B. Ketone oder Azide können eingesetzt werden. Typische Arylketon-Sensibilisierungsmittel dieses Typs sind z. B. Benz(a)anthracen-7,12-dion und 4,4′-Bis(dimethylamino)benzophenon. Weitere, vorteilhafte Sensibilisierungsmittel vom Ketontyp sind 4,4′-Bis(diethylamino)benzophenon, Dibenzalaceton und 4,4′-Bis-(dimethylamino)benzophenonimid wie auch Verbindungen des aus der US-A 2 670 287 bekannten Typs. Eine weitere Klasse vorteilhafter Sensibilisierungsmittel sind Cumarine, speziell in 3-Stellung substituierte Cumarine, wie sie in der DE-A 27 04 368 beschrieben sind.

Die Sensibilisatoren werden in üblichen Konzentrationen zugesetzt. Als vorteilhaft haben sich Konzentrationen von 0,01 bis 20 Gew.-%, bezogen auf das Gewicht an photovernetzbarem Polymerisat, erwiesen.

Polymerisierbare Gemische mit hoher Lichtempfindlichkeit erhält man durch Kombination der ggf. sensibilisierten photovernetzbaren Polymeren mit Photopolymerisationsinitiatoren und radikalisch polymerisierbaren Verbindungen.

Als Photoinitiatoren können zahlreiche Substanzen Verwendung finden. Beispiele sind Benzoine, Benzoinether, Mehrkernchinone, wie 2-Ethylanthrachinon, Acridinderivate, wie 9-Phenylacridin oder Benzacridine, Phenzinderivate, wie 9,10-Dimethylbenz(a)phenazin, Chinoxalin- oder Chinolinderivate, wie 2,3-Bis-(4-methoxyphenyl)chinoxalin oder 2-Styrylchinolin) Chinazolinverbindungen oder Acylphosphinoxidverbindungen. Photoinitiatoren dieser Art sind in den DE-C 20 27 467, 20 39 861, der DE-A 37 28 168, der EP-B 11 786 und der EP-A 220 589 beschrieben. Außerdem können z. B. Hydrazone, Mercaptoverbindungen, Pyrylium- oder Thiopyryliumsalze, Xanthone, Thioxanthone, Benzochinone, Acetophenone, Benzophenone, synergistische Mischungen mit Ketonen oder Hydroxyketonen und Farbstoff-Redoxsysteme einge setzt werden. Besonders bevorzugt werden Photoinitiatoren, die durch Licht spaltbare Trihalogenmethylgruppen aufweisen, wobei insbesondere entsprechende Verbindungen aus der Triazin- oder Thiazolinreihe erwähnt sein sollen. Solche Verbindungen sind in den DE-A 27 18 259, 33 33 450 und 33 37 024 beschrieben. Ein bevorzugtes Beispiel ist 2-(4-Methoxystyryl)-4,6-bis-trichlormethyl-s-triazin. Diese Verbindungen können mit Vorteil mit photooxydierbaren Farbstoffen, photoreduzierbaren Verbindungen und ggf. weiteren Coinitiatoren kombiniert werden, wie es z. B. in den EP-A 284 939 und 287 817 beschrieben ist.

Die Photoinitiatoren werden im allgemeinen in Mengenanteilen von 0,01 bis 15, vorzugsweise von 0,1 bis 10 Gew.-%, bezogen auf die nichtflüchtigen Bestandteile des Gemischs, zugesetzt.

Die erfindungsgemaßen Gemische enthalten vorzugsweise zusätzlich eine radikalisch polymerisierbare, bevorzugt niedermolekulare Verbindung mit mindestens einer endständigen ethylenischen Doppelbindung. Als polymerisierbare Verbindungen werden bevorzugt Ester der Acryl-oder Methacrylsäure mit ein- oder mehrwertigen, vorzugsweise primären Alkoholen verwendet. Vorzugsweise sollten die polymerisierbaren Verbindungen mehr als eine, insbesondere 2 bis 4, polymerisierbare Gruppen enthalten. Beispiele für geeignete mehrwertige Alkohole sind Ethylenglykol, Propylenglykol, Butandiol-1,4, Butandiol-1,3, Diethylenglykol, Triethylenglykol oder Poly ethylen- oder Polypropylenglykole mit Molekulargewichten von etwa 200 bis 1.000, Neopentylglykol, Glycerin, Trimethylolethan und -propan, Pentaerythrit, Bisphenol-A-Derivate sowie Umsetzungsprodukte dieser Verbindungen mit Ethylenoxid und/oder Propylenoxid. Besonders geeignet sind Urethangruppen enthaltende Bisacrylate und Bismethacrylate, die durch Umsetzung von 1 mol eines Diisocyanats mit 2 mol Hydroxyalkylacrylat oder -methacrylat erhalten werden. Das Diisocyanat kann auch ein oligomeres, durch Umsetzen eines Diols mit einem molaren Überschuß an monomerem Diisocyanat erhaltenes Produkt sein. Derartige und ähnliche Urethangruppen enthaltende Monomere sind in den DE-A 20 64 079, 28 22 190, 30 48 502 und 35 40 480 beschrieben. Zusätzlich zu den genannten Estern können auch Amide von Acryl- oder Methacrylsäure eingesetzt werden. Beispiele sind Methylenbis-(meth)-acrylamid, Ethylenbis-(meth)acrylamid und m-Xylylenbis-(meth)acrylamid.

Der Mengenanteil des Gemischs an Monomeren beträgt im allgemeinen etwa 5 bis 80, vorzugsweise 20 bis 60 Gew.-% der nichtflüchtigen Bestandteile.

Als lichtempfindliche Verbindungen können die Gemische auch lichthärtbare Diazo- oder Azidoverbindungen enthalten. Vorzugsweise werden Diazoniumsalz-Polykondensationsprodukte eingesetzt, die durch Kondensation von aromatischen Diazoniumsalzen mit aktiven Carbonylverbindungen, besonders Formaldehyd, erhalten werden.

Mit besonderem Vorteil werden Mischkondensationsprodukte verwendet, die außer den Diazoniumsalzeinheiten $A\text{-}N_2X$ noch andere, nicht lichtempfindliche Einheiten B enthalten, die von kondensationsfähigen Verbindungen, insbesondere aromatischen Aminen, Phenolen, Phenolethern, aromatischen Thioethern, aromatischen Kohlenwasserstoffen, aromatischen Heterocyclen und organischen Säureamiden, abgeleitet sind. Diese Kondensationsprodukte sind in der DE-A 20 24 244 beschrieben. Allgemein sind alle Diazoniumsalz-Polykondensationsprodukte geeignet, die in der DE-A 27 39 774 beschrieben sind.

Die Diazoniumsalzeinheiten $A\text{-}N_2X$ leiten sich bevorzugt von Verbindungen der Formel $(R^1\text{-}R^2\text{-})_pR^3\text{-}N_2X$ ab, wobei

X das Anion der Diazoniumverbindung,
p eine ganze Zahl von 1 bis 3,
$R^1$ einen aromatischen Rest mit mindestens einer zur Kondensation mit aktiver Carbonylverbindung befähigten Position,
$R^3$ eine Arylengruppe, vorzugsweise eine ggf. substituierte Phenylengruppe,
$R^2$ eine Einfachbindung oder eine der Gruppen:
$-(CH_2)_q-NR^4-$,
$-O-(CH_2)_r-NR^4-$,
$-S-(CH_2)_r-NR^4-$,
$-S-CH_2CO-NR^4-$,
$-O-R^5-O-$,
- O -
- S - oder
$-CO-NR^4-$
bedeuten, worin
q eine Zahl von 0 bis 5,
r eine Zahl von 2 bis 5,
$R^4$ Wasserstoff, eine Alkylgruppe mit 1 bis 5 C-Atomen, eine Aralkylgruppe mit 7 bis 12 C-Atomen oder eine Arylgruppe mit 6 bis 12 C-Atomen, und
$R^5$ eine Arylengruppe mit 6 bis 12 C-Atomen ist.

Weitere vorteilhafte Polykondensationsprodukte werden erhalten, indem ein ggf. substituiertes Diphenylamindiazoniumsalz zuerst mit einer aromatischen Verbindung $R'-O-CH_2-B$ und danach mit einer aromatischen Verbindung $R'-O-CH_2-B-CH_2-O-R'$ kondensiert wird, wobei $R'$ ein Wasserstoffatom, ein Alkyl- oder aliphatischer Acylrest und B der Rest einer der vorstehend aufgezählten kondensationsfähigen Verbindungen ist. Diese Kondensationsprodukte sind in der EP-A 126 875 beschrieben.

Der Mengenanteil an Diazoniumsalz-Polykondensations produkten beträgt 0 bis 60, vorzugsweise 10 bis 40 Gew.-%, bezogen auf die nichtflüchtigen Bestandteile des Gemischs.

Der Zusatz von Diazoniumsalz-Polykondensationsprodukten allein zu den erfindungsgemäßen Polymeren ergibt keine bevorzugten Gemische. Dagegen werden Gemische, die zusätzlich Photoinitiatoren und niedermolekulare polymerisierbare Verbindungen der vorstehend beschriebenen Art enthalten, mit Vorteil eingesetzt.

Die lichtempfindlichen Gemische können je nach geplanter Anwendung und je nach den gewünschten Eigenschaften weitere Stoffe als Zusätze enthalten. Beispiele sind: Inhibitoren zur Verhinderung der thermischen Polymerisation der Monomeren, Wasserstoffdonatoren, Farbstoffe, gefärbte und ungefärbte Pigmente, Farbbildner, Indikatoren, Weichmacher, Kettenüberträger, Verlaufmittel, Mattierungs- oder Gleitmittel und Säuren zur Stabilisierung der Diazoniumsalz-Polykondensate, bevorzugt Phosphorsäure.

Beispiele für Farbstoffe und/oder Pigmente sind Triphenylmethanfarbstoffe, z. B. Brillant Green Dye (C.I. 42 040), Viktoriareinblau FGA, Viktoriareinblau BO (C.I. 42 595), Malachitgrün, Kristallviolett, Viktoriablau B (C.I. 44 045), Rodamin 6 (C.I. 45 160), Naphthalimidfarbstoffe, Azosole und 3′-Phenyl-7-dimethylamino-2,2′-spirodi(2H-1-benzopyran). Photochrome Systeme, die bei Belichtung mit aktinischem Licht ihre Farbe reversibel oder irreversibel ändern, ohne hierbei den Photopolymerisationsprozeß zu stören, sind z. B. Leukofarbstoffe zusammen mit geeigneten Aktivatoren. Beispiele für Leukofarbstoffe sind die Leukobasen der Triphenyl methanfarbstoffe, wie Kristallviolett, Malachitgrün, Leuko-Basischblau, Leuko-Pararosanilin, Leuko-Patentblau A und V genannt; ferner kommt auch Rhodamin B-Base in Betracht. Als Aktivatoren für diese photochromen Verbindungen kommen u.a. organische Halogenverbindungen, die bei Bestrahlung mit aktinischem Licht Halogenradikale abspalten, oder Hexaarylbisimidazole in Betracht. Als sensitometrische Regler können Verbindungen wie 9-Nitroanthracen, 10,10′-Bisanthron, Phenazinium-, Phenoxazinium-, Acridinium- oder Phenothiazinium-Farbstoffe, insbesondere in Kombination mit milden Reduktionsmitteln, zugesetzt werden.

Die Zusatz- und/oder Hilfsstoffe sind in den lichtempfindlichen Gemischen in den für diese Zusatzstoffe üblichen und bekannten wirksamen Mengen vorhanden. Ihre Menge sollte jedoch im allgemeinen 30 Gew.-%, vorzugsweise 20 Gew.-%, bezogen auf die photopolymerisierbare Aufzeichnungsschicht, nicht überschreiten.

Die Beschichtung des Trägermaterials erfolgt aus entsprechenden organischen Lösemitteln oder Lösemittelgemischen, und zwar im allgemeinen durch Gießen, Sprühen oder Eintauchen. Die Art des Auftrags hängt von der gewünschten Schichtdicke ab, wobei die Schichtdicken der trockenen Schicht im allgemeinen zwischen 0,5 und 200 µm liegen.

Als Schichtträger eignen sich z. B. Magnesium, Zink, Kupfer, Aluminium, Stahl, aber auch Polyester-

oder Celluloseacetatfolie, Perlongaze etc., deren Oberfläche bei Bedarf einer Vorbehandlung unterworfen sein kann. Das Trägermaterial kann dabei als endgültiger Schichtträger fungieren oder als temporäres Trägermaterial, von dem die lichtempfindliche Schicht auf das zu bearbeitende Werkstück mittels Laminieren übertragen wird.

Das erfindungsgemäße Gemisch erfordert normalerweise keinen Sauerstoffausschluß bei der Belichtung. Es ist aber im allgemeinen günstig, die Gemische, die radikalisch polymerisierbare Monomere enthalten, während der Lichtpolymerisation dem Einfluß des Luftsauerstoffs weitgehend zu entziehen. Im Fall der Anwendung des Gemischs in Form dünner Kopierschichten ist es empfehlenswert, einen geeigneten, für Sauerstoff wenig durchlässigen Deckfilm aufzubringen. Dieser kann selbsttragend sein und vor der Entwicklung der Kopierschicht abgezogen werden. Für diesen Zweck sind z. B. Polyesterfilme geeignet. Der Deckfilm kann auch aus einem Material bestehen, das sich in der Entwicklerflüssigkeit löst oder mindestens an den nicht gehärteten Stellen bei der Entwicklung entfernen läßt. Hierfür geeignete Materialien sind z. B. Polyvinylalkohol, Vinylalkohol/Vinylacetat-Copolymere, Polyvinylpyrrolidon, Vinylpyrrolidon/Vinylacetatcopolymere, Polyacrylsäure, Butadien/Maleinsäure-Copolymere, Polyvinylmethylether, Polyphosphate, Zucker usw.. Solche Deckschichten haben im allgemeinen eine Dicke von 0,1 bis 10, vorzugsweise von 0,5 bis 5 µm.

Das mit den lichtempfindlichen Gemischen hergestellte Aufzeichnungsmaterial dient einerseits zur Herstellung von Bildern auf geeigneten Trägern bzw. Empfangsblättern, andererseits zur Herstellung von Reliefs, die als Druckformen, Siebe, Reservagen und dgl. Anwendung finden.

Darüber hinaus ist es aber auch möglich, die lichtempfindlichen Gemische zur Herstellung von durch UV-Strahlung härtbaren Lacken zu verwenden, die als Oberflächenschutz eingesetzt werden können, oder zur Formulierung von UV-härtbaren Druckfarben.

Bevorzugt wird das Gemisch zur Herstellung von Flachdruckformen verwendet, wobei als Trägermaterial Aluminium bevorzugt wird. Besonders bevorzugt wird Aluminium, das für diesen Zweck in üblicher Weise vorbehandelt wird, z. B. durch mechanisches, chemisches oder elektrochemisches Aufrauhen und ggf. anschließende anodische Oxydation. Eine weitere Behandlung dieses Trägermaterials, z. B. mit Polyvinylphosphonsäure, Alkalisilikat, Phosphat, Hexafluorozirkonat, Chromat, Borat, Polyacrylamid und Cellulosederivaten, ist vorteilhaft.

Die Verarbeitung der aus den Gemischen erhaltenen Aufzeichnungsmaterialien erfolgt in bekannter Weise durch bildmäßiges Belichten und Auswaschen der unbelichteten Schichtbereiche mit einem geeigneten Entwickler.

Die Belichtung des Aufzeichnungsmaterials erfolgt in bekannter Weise unter einer Vorlage mit Kopierlichtquellen, die einen möglichst hohen Spektralanteil im nahen Ultraviolettbereich emittieren. Sie kann auch durch Laserbestrahlung erfolgen. Geeignet für die Bestrahlung sind leistungsgerechte kürzerwellige Laser, beispielsweise Ar-Laser, Krypton-Ionen-Laser, Helium/Cadmium-Laser, die etwa zwischen 300 und 600 nm emittieren, aber für einige Schichten auch $CO_2$-Laser, welche bei 10,6 µm emittieren, oder YAG-Laser, die bei 1,06 µm emittieren.

Als Entwicklerlösungen werden neutrale oder bevorzugt alkalische wäßrige Lösungen mit einem pH-Wert im Bereich von 8 bis 14, vorzugsweise 8,5 bis 13, verwendet, die Puffersalze, z. B. wasserlösliche Alkaliphosphate, -silikate, -borate, -carbonate, -acetate oder -benzoate, enthalten. Als weitere Bestandteile werden Netzmittel, vorzugsweise anionische Netzmittel, und ggf. wasserlösliche Polymere verwendet. Die Lösung kann auch geringe Mengen, z. B. bis zu 5, bevorzugt nicht mehr als 2 Gew.-% an mit Wasser mischbaren organischen Lösemitteln enthalten. Bevorzugt werden schwerflüchtige Lösemittel, z. B. araliphatische Alkohole, deren Dampfdruck bei der Handhabung des Entwicklers nicht ins Gewicht fällt. Die Entwicklung kann in bekannter Weise durch Tauchen, Besprühen, Bürsten oder Tamponieren erfolgen. Anschließend kann das entwickelte Material mit einem Konservierungsmittel behandelt werden.

Zur Steigerung der Druckauflage kann nach der Belichtung eine Nacherwärmung erfolgen oder die entwickelte Druckplatte nachbelichtet werden. Beide Schritte können auch kombiniert angewendet werden. Ohne Nacherwärmung oder -belichtung werden bereits gute Druckauflagen erreicht.

Auch eine lichtempfindliche Schicht mit DiazoniumsalzPolykondensationsprodukten, kann durch eine thermische Nachbehandlung zusätzlich verfestigt werden, was insbesondere bei der Anwendung als Flachdruckform sinnvoll ist. Zu diesem Zweck wird die konservierte Druckform auf Temperaturen zwischen 180 und 240 °C erwärmt. Die Dauer dieser Behandlung ist abhängig von der Temperatur und schwankt zwischen 2 und 20 Minuten. Diese thermische Nachbehandlung erfordert keinen Zusatz eines Vernetzungsmittels. Es wird angenommen, daß die Polymeren mit lichtvernetzbaren Seitengruppen eine zusätzliche thermische Vernetzung erfahren. Es kann aber sinnvoll sein, dem lichtempfindlichen Gemisch einen thermischen Vernetzer zuzufügen, z. B. ein organisches Peroxid mit einer Scorch-Temperatur von mindestens 100 °C, das oberhalb dieser Temperatur befähigt ist, Radikale zu bilden, wie es in der EP-A 247 461

beschrieben ist. Geeignete Peroxide sind Peroxyester, Peroxyketale, Bisaralkylperoxide, Dialkylperoxide und Bis-dialkylperoxide. Durch diese thermische Nachbehandlung wird das Farbannahmeverhalten der lichtempfindlichen Schicht erheblich verbessert, insbesondere dann, wenn solche Polymeren eingesetzt werden, die eine hohe Hydroxylzahl aufweisen.

Die erfindungsgemäßen Gemische und die daraus erhaltenen Aufzeichnungsmaterialien sind nach der Belichtung genügend hydrophob, um eine gute Farbannahme zu gewährleisten. Die belichteten Bereiche quellen beim Entwicklungsvorgang praktisch nicht. Die erfindungsgemäßen Polymeren zeichnen sich gegenüber bekannten lichtvernetzbaren Polymeren auf Polyvinylalkoholbasis durch eine geringere Sprödigkeit aus. Besonders diejenigen Vertreter, deren Polyurethan-Pfropfgrundlage Ethergruppen enthält, also unter Mitverwendung von Polyetherdiolen erhalten worden ist, zeigen diese Eigenschaft sehr deutlich. Auch wird dadurch die Löslichkeit in wäßrigen Entwicklerlösungen verbessert. Die Elastizität der erfindungsgemäßen Pfropfpolymeren wird auch durch die Urethangruppen in der Pfropfgrundlage verbessert.

Durch die lichtvernetzbaren Gruppen im Polymeren erhält die lichtempfindliche Schicht nach der Belichtung eine intensive Härtung; die erhöhte Festigkeit der belichteten Polymerschicht führt wiederum zu einer Steigerung der Druckauflage.

Die bei bekannten auf Polyvinylalkoholen basierenden lichtvernetzbaren Polymeren beobachtete Sprödigkeit wird einerseits durch einen höheren Modifizierungsgrad der erfindungsgemäßen Polyvinylalkoholpfropfpolymerisate und andererseits durch die erwähnten strukturellen Besonderheiten dieser Pfropfpolymerisate beseitigt. So sind die Schmelzpunkte der auf Polyurethane aufgepropf ten Polyvinylalkoholderivate gegenüber herkömmlichen Polyvinylalkoholen deutlich abgesenkt, wodurch auch die Sprödigkeit der Polymeren erheblich geringer wird. Die Schmelzpunkte der Polymerisate können sowohl durch die Zusammensetzung der Polyurethanpfropfgrundlage als auch durch den Verseifungsgrad und die Derivatisierung der entstandenen OH-Gruppen sehr breit variiert werden.

Die erfindungsgemäßen lichtempfindlichen Aufzeichnungsmaterialien ergeben Druckplatten, die sich durch hervorragende Wiedergabeeigenschaften auszeichnen und leicht und schleierfrei mit umweltneutralen Entwicklerlösungen verarbeitbar sind. Die intermolekulare Vernetzung des Polymeren beim Belichten bewirkt eine extrem hohe Molekulargewichtszunahme. Dadurch erhält die lichtempfindliche Schicht zusätzliche Härte, was sich bei hohen Druckauflagen auswirkt. Auch die Lichtempfindlichkeit der erfindungsgemäßen Gemische ist stark verbessert, vor allem Druckplatten ohne Sauerstoffsperrschicht zeichnen sich gegenüber vergleichbaren bekannten Druckplatten durch kürzere Belichtungszeiten aus.

Die nachstehenden Beispiele sollen die Erfindung und ihre Anwendungsmöglichkeiten näher erläutern. Gewichtsteile (Gt) und Volumenteile (Vt) stehen im Verhältnis von $g/cm^3$; Prozentzahlen und Mengenverhältnisse sind, wenn nicht anders angegeben, in Gewichtsteilen zu verstehen.

Im folgenden wird zunächst die Herstellung der in den Beispielen eingesetzten Pfropfpolymeren beschrieben.

a) Herstellung von Polyurethan-Pfropfgrundlagen

In einem Reaktionsgefäß mit Rührwerk wurden unter Stickstoffatmosphäre jeweils die Diolkomponente und der Katalysator vorgelegt, und das Gemisch wurde auf eine Reaktionstemperatur zwischen 65 und 100 °C erwärmt. Die Diisocyanatkomponente wurde anschliessend so zudosiert, daß die Temperatur des Reaktionsgemischs 120 °C, vorzugsweise 100 °C, nicht überschritt. Nach vollständiger Zudosierung der Diisocyanatkomponente wurde zur Vervollständigung der Reaktion bis zu zwei Stunden auf 80 bis 100 °C nacherwärmt. Die Vollständigkeit des Umsatzes und damit das Ende der Reaktion wurden durch Analyse des Diisocyanatverbrauchs nach üblichen Methoden (z. B. IR-Spektroskopie, Titration) ermittelt.

Einzelheiten über die Zusammensetzung der Reaktionsgemische der Beispiele sowie das berechnete mittlere Molekulargewicht ( $\overline{M}_{ber}$) der resultierenden Polyurethane (PU) können der Tabelle 1 entnommen werden. Die Molekulargewichte ergeben sich aus dem Molverhältnis Diolkomponente/Diisocyanat unter der Annahme einer vollständigen Umsetzung der NCO-Gruppen.

Tabelle 1

| Polyurethan (PU) | Diolkomponente PEG/Bu Molverhältnis) | Reaktionstemp. °C | Molverhältnis Diolkomponent/Diisocyanat | $\overline{M}_{ber}$ |
|---|---|---|---|---|
| A | 7 : 3 | 80 | 1 : 0,9 | 6470 |
| B | 7 : 3 | 72 | 1 : 0,9 | 6470 |
| C | 3 : 2 | 78 | 1 : 0,97 | 18300 |
| D | 7 : 3 | 75 | 1 : 0,97 | 19900 |

Alle Produkte wurden mit Isophorondiisocyanat als Diisocyanatkomponente hergestellt. Als Katalysator wurde bei allen Produkten 1,4-Dimethylpiperazin in einer Menge von 0,48 mol-%, bezogen auf Diisocyanat, eingesetzt.
PEG = Polyethylenglykol, Molgewicht 600
Bu = 1,4-Butandiol

b) Herstellung der Pfropfpolymeren

Die Polyurethan-Pfropfgrundlage wurde jeweils in einem Reaktionsgefäß unter Stickstoffatmosphäre aufgeschmolzen bzw. unter Zusatz geringer Mengen Methanol gelöst und auf eine Temperatur von etwa 60 bis 100 °C erwärmt. Die zu pfropfenden Monomeren wurden) ggf. gelöst in einem Lösemittel (z. B. Methanol), einschließlich des in den Monomeren gelösten radikalischen Initiators so langsam zu der Polyurethan-Pfropfgrundlage dosiert, daß die Bildung von Homopolymerisat weitgehend unterblieb. Die Temperatur des Reaktionsgemischs sollte 120 °C, besser noch 100 °C nicht überschreiten. Nach Beendigung der Nachreaktion wurde überschüssiges Restmonomeres durch azeotrope Destillation mit Methanol entfernt. Die Zusammensetzung der einzelnen Reaktionsgemische sowie die Reaktionsparameter sind in Tabelle 2 angegeben.

Tabelle 2

| Pfropfpolymeres | PU | VAc g/g PU | Start Temp. °C | Zudos-Zeit Min. | Nachreakt. Min. | Gepfr. Monom. Gew.-% | $J_o$ ml/g | Berechnetes Mol-Gew. |
|---|---|---|---|---|---|---|---|---|
| AV | A | 4 | 75 | 420 | 45 | 79,8 | 21,9 | 31300 |
| BV | B | 2,32 | 73 | 420 | 45 | 69,3 | 18,3 | 21000 |
| CV | C | 3,16 | 75 | 300 | 45 | 74,7 | 26,3 | 72500 |
| DV | D | 3,16 | 75 | 420 | 45 | 74,5 | 28,7 | 78000 |
| VAc = Vinylacetat<br>$J_o$ = Grenzviskositätszahl (intrinsic viscosity) | | | | | | | | |

Alle Produkte wurden unter Verwendung von 0,2 mol-% Dibenzoylperoxid (bezogen auf das eingesetzte Monomere) hergestellt. Die Grenzviskositätszahlen wurden im Ostwaldviskosimeter in Tetrahydrofuran bei 25 °C ermittelt, die vermessenen Konzentrationen wurden so gewählt, daß eine Hagenbachkorrektur nicht durchgeführt werden mußte. Die gepfropfte Monomermenge in Gew.-% bezieht sich auf das Gewicht des Gesamtpolymeren.

c) Verseifung der Pfropfpolymeren

Die Pfropfpolymerisate aus Tabelle 2 wurden innerhalb zwei Stunden bei Raumtemperatur umgeestert bzw. verseift. Hierzu wurden die Produkte zu 50%iger Lösung in Methanol gelöst und mit methanolischer

Natronlauge (10 %ig) versetzt. Es wurden je nach Alkalimenge und dem Pfropfungsgrad des Pfropfpolymerisats polymere Hydrolyseprodukte mit unterschiedlichem Hydrolysegrad erhalten. Die erhaltenen Gele wurden granuliert, das Granulat mit Methanol gewaschen (ggf. unter Zusatz von Essigsäure zur Neutralisation der Natronlauge) und getrocknet. Die Verfahrensbedingungen und Ergebnisse sind in Tabelle 3 aufgeführt.

Tabelle 3

| Pfropfpolyvinylalkohol | Pfropfpolyvinylacetat | mol-% NaOH je Estereinheit | mol-% $H_2O$ je Estereinheit | Hydrolyse grad in % | $\overline{M}_{ber}$ |
|---|---|---|---|---|---|
| E | AV | 1,92 | 0 | 98,2 | 22 000 |
| F | BV | 5,0 | 0 | 98,9 | 14 000 |
| G | CV | 1,92 | 0 | 98 | 47 000 |
| H | DV | 1,97 | 0 | 98,4 | 44 000 |

Im folgenden wird die Herstellung von erfindungsgemäßen ungesättigten Polymeren mit Styrylpyridinium- bzw. Styrylchinolinium-Seitengruppen aus den Pfropfpolyvinylalkoholen E bis H im einzelnen beschrieben. Die Polymeren und ihre allgemeinen Herstellungsdaten sind in der nachfolgenden Tabelle 4 zusammengestellt.

Tabelle 4

| erfindungsgemäßes Polymeres | eingesetztes OH-Polymeres | ungesättigter Aldehyd | weitere reaktive Verbindung | 1) mol-% | |
|---|---|---|---|---|---|
| I | H | N-Methyl-4-(p-formyl-styryl)-pyridinium-methosulfat | - | 2,4 | |
| K | G | " | - | 4,9 | |
| L | G | " | - | 6,25 | |
| M | E | " | - | 2,4 | |
| N | F | " | - | 2,4 | |
| O | F | " | - | 3,3 | |
| P | F | " | - | 4,8 | |
| Q | F | " | - | 5,3 | |
| R | F | " | - | 8,0 | |
| S | F | " | - | 11,1 | |
| T | H | N-Ethyl-4-(p-formyl-styryl)-pyridinium-p-toluolsulfonat | - | 2,9 | |
| U | H | N-Benzyl-4-(p-formyl-styryl)-pyridinium-bromid | - | 2,7 | |
| V | H | N-Methyl-4-(p-formyl-styryl)-pyridinium-jodid | - | 3,1 | |
| W | H | N-Methyl-4-(p-formyl-styryl)-pyridinium-methosulfat | - | 2,9 | |
| X | I | - | 2-Hydroxyethyl-methacrylat | 2,4 | 13,3* |
| Y | I | - | N-Methylol-methacrylamid | 2,4 | 9,3* |
| Z | G | N-Methyl-4-(p-formyl-styryl)-pyridinium-methosulfat | 2-Hydroxyethyl-methacrylat | 2,5 | 19,2* |

Fortsetzung der Tabelle 4

| erfindungsgemäßes Polymeres | eingesetztes OH-Polymeres | ungesättigter Aldehyd | weitere reaktive Verbindung | 1) mol-% | |
|---|---|---|---|---|---|
| AA | G | N-Methyl-4-(p-formyl-styryl)-pyridinium-methosulfat | N-Methylol-methacrylamid | 2,5 | 13,1* |
| BB | I | - | Methacryloyl-chlorid | 2,9 | 25,3* |
| CC | I | - | Propenylsulfonyl-isocyanat | 2,4 | |
| DD | I | - | Toluolsulfonyl-isocyanat | 2,1 | |
| EE | E | N-Methyl-4-(p-formyl-styryl)-pyridinium-methosulfat | Phthalsäure-anhydrid | 2,45 | |
| FF | H | N-Ethyl-4-(p-formyl-styryl)-chinolinium-p-toluolsulfonat | - | 2,1 | |
| GG | H | " | - | 4,3 | |
| HH | G | N-Ethyl-4-[p-(2,2-dimethoxy-ethoxy)styryl]pyridinium-p-toluolsulfonat | - | 1,2 | |
| II | F | N-Methyl-4-[p-(2,2-dimethoxy-ethoxy)styryl]chinolinium-jodid | - | 0,9 | |

1) Styrylpyridinium- bzw. Styrylchinoliniumgruppen

* (Meth)acryloylgruppen in mol-%

Polymeres I

10 Gt des Polymeren H wurden in 100 Vt dest. Wasser unter Erwärmen gelöst. Die Lösung wurde mit 0,04 Gt 2,6-Di-tert.-butyl-4-methyl-phenol, 0,08 Gt Natriumoctylsulfat und 2,01 Gt N-Methyl-4(p-formyl-styryl)-pyridinium-methosulfat versetzt. Hierzu wurden 0,4 Gt konz. Salzsäure gegeben, und die Mischung wurde zwei Stunden bei 40 °C gerührt. Danach wurde auf Raumtemperatur abgekühlt und mit 2,88 Gt n-Butyraldehyd versetzt; dann wurden 2,6 Vt konz. Salzsäure in 20 Vt dest. Wasser zugetropft, und die Mischung wurde weitere zwei Stunden bei 40 °C gerührt. Das ausgefallene Polymere wurde in Ethanol gelöst, in Wasser ausgefällt und im Vakuumtrockenschrank bei 40 °C getrocknet. Es enthielt 2,4 mol.-% Styrylpyridiniumgruppen.

Polymeres K

10 Gt des Polymeren G wurden in 100 Vt dest. Wasser unter Erwärmen gelöst und wie beim Polymeren I beschrieben mit 4,2 Gt N-Methyl-4-(p-formylstyryl)-pyridiniummethosulfat und 2,88 Gt n-Butyraldehyd acetalisiert. Das umgefällte und getrocknete Polymere enthielt 4,9 mol.-% Styrylpyridiniumeinheiten.

Polymeres L

Aus 10 Gt des Polymeren G wurde wie bei dem Polymeren I beschrieben mit 5,03 Gt des dort verwendeten Pyridiniumsalzes und 3,60 Gt n-Butyraldehyd ein Bindemittel hergestellt, das 6,25 mol.-% Styrylpyridiniumgruppen enthielt.

Polymeres M

Aus 10 Gt des Polymeren E wurde wie bei dem Polymeren I beschrieben mit dem dort verwendeten Pyridiniumsalz und n-Butyraldehyd ein Bindemittel hergestellt, das nach dem Umfällen und Trocknen 2,4 mol.-% Styrylpyridiniumgruppen enthielt.

Polymere N bis S

Aus je 10 Gt des Polymeren F wurden wie bei 1 beschrieben mit unterschiedlichen Mengen Pyridiniumsalz und jeweils 2,88 Gt n-Butyraldehyd Polymere hergestellt. Der Gehalt an Styrylpyridiniumeinheiten ist in Tabelle 4 angegeben.

Polymere T bis W

Mit je 10 Gt des Polymeren H wurden mit Hilfe verschiedener Pyridiniumsalze Bindemittel hergestellt. Die Synthese wurde wie bei 1 beschrieben durchgeführt. Das Salz wurde jeweils in äquivalenter Menge zugegeben, so daß im entstandenen Bindemittel etwa 3 mol.-% der ursprünglich vorhandenen Hydroxylgruppen mit dem Lichtvernetzbaren Aldehyd acetalisiert wurden. Anschließend wurde mit jeweils 2,88 Gt n-Butyraldehyd acetalisiert und das Polymere durch Umfällen gereinigt. Der Gehalt an Styrylpyridiniumeinheiten ist in Tabelle 4 angegeben.

Polymere X und Y

Aus je 10 Gt des Polymeren 1 wurden zwei Lösungen in je 80 Vt N-Methylpyrrolidon hergestellt. Dann wurden X) 3,9 Gt 2-Hydroxyethylmethacrylat bzw. Y) 2,31 Gt N-Methylolmethacrylamid zugegeben, der pH-Wert mit Phosphorsäure auf 2,5 eingestellt, 0,05 Gt 2,6-Di-tert.-butyl-4-methyl-phenol zugegeben und die Mischungen 20 Stunden bei 60 °C gerührt. Nach Abkühlen auf Raumtemperatur wurden die Polymeren aus Wasser gefällt. Sie enthielten 2,4 mol.-% Styrylpyridiniumgruppen und X) 13,3 mol.-%, Y) 9,3 mol.-% Methacryloylgruppen.

Polymere Z und AA

Aus je 10 Gt des Polymeren G wurden zwei Lösungen in je 80 Gt dest. Wasser hergestellt. Diese wurden mit Phosphorsäure auf einen pH-Wert von 2,5 eingestellt, mit 0,05 Gt 2,6-Di-tert.-butyl-4-methyl-phenol und mit Z) 5,2 Gt 2-Hydroxyethylmethacrylat bzw. AA) 3,5 Gt N-Methylolmethacrylamid versetzt und 20 Stunden bei 60 °C gerührt. Anschließend wurden zu beiden Lösungen je 0,08 Gt Natriumoctylsulfat und 2,01 Gt N-Methyl4-(p-formylstyryl)-pyridinium-methosulfat gegeben und die Mischungen zwei Stunden bei 40 °C gerührt. Die Polymerlösungen wurden danach wie bei 1 beschrieben mit je 2,88 Gt n-Butyraldehyd acetalisiert. Die umgefällten Polymerisate enthielten 2,5 mol.-% Styrylpyridiniumgruppen und Z) 19,2 mol.-%, AA) 13,1 mol.-% Methacryloylgruppen.

Polymeres BB

10 Gt eines in gleicher Weise wie das Polymere I hergestellten Polymeren wurden in 100 Vt N-Methylpyrrolidon gelöst und mit 0,2 Gt 2,6-Di-tert.-butyl-4-methyl-phenol und 0,05 Gt p-Dimethylaminopyridin versetzt. Hierzu wurden 4,1 Gt Methacryloylchlorid getropft und vorsichtig 5,5 Gt Triethylamin gegeben.

Die Lösung wurde acht Stunden bei 50 °C gerührt. Nach Abkühlen auf Raumtemperatur wurde das Polymerisat aus Wasser gefällt. Es enthielt 2,9 mol.-% Styrylpyridiniumgruppen und 25,3 mol.-% Methacryloylgruppen.

Polymeres CC

10 Gt des Polymeren I wurden in 100 Vt N-Methylpyrrolidon gelöst und tropfenweise mit 2,07 Gt Propenylsulfonylisocyanat versetzt. Zur Lösung wurden zwei Tropfen Dibutylzinndilaurat gegeben und diese anschließend 1,5 Stunden bei Raumtemperatur, 3 Stunden bei 60 °C und 12 Stunden bei Raumtemperatur gerührt. Das Polymere wurde aus Aceton gefällt. Es enthielt 2,4 mol.-% Styrylpyridiniumgruppen und hatte die Säurezahl 42.

Polymeres DD

10 Gt eines in gleicher Weise wie das Polymere I hergestellten Polymeren wurden in 100 Vt N-Methylpyrrolidon gelöst. Hierzu wurden 3,95 Gt p-Toluolsulfonylisocyanat getropft. Nach Zugabe von zwei Tropfen Dibutylzinndilaurat wurde 1,5 Stunden bei Raumtemperatur, 3 Stunden bei 60 °C und 12 Stunden bei Raumtemperatur gerührt. Das Polymere wurde aus Aceton gefällt. Es enthielt 2,1 mol.-% Styrylpyridiniumgruppen und hatte die Säurezahl 36.

Polymeres EE

20 Gt des Polymeren E wurden in 160 Gt dest. Wasser gelöst. Bei Raumtemperatur wurden 5,8 Gt n-Butyraldehyd und 0,08 Gt 2,6-Di- tert.butyl-4-methyl-phenol zugegeben. Zu dieser Mischung wurde unter gutem Rühren eine Lösung aus 0,16 Gt Natriumoctylsulfat, 2 Gt konz. Salzsäure und 24 Gt Wasser getropft. Nachdem das Gemisch eine Stunde bei Raumtemperatur gerührt worden war, wurde es auf 40 °C erwärmt und nochmals zwei Stunden gerührt. Nach Zugabe von weiteren 5,7 Gt konz. Salzsäure wurde noch zwei Stunden bei 40 °C gerührt. Nach dem Abkühlen auf Raumtemperatur wurde die wäßrige Phase vom ausgefallenen Polymeren abdekantiert, das Polymere in Ethanol gelöst, aus 10.000 Gt dest. Wasser gefällt und im Vakuumtrockenschrank bis zur Gewichtskonstanz getrocknet. 20 Gt des so hergestellten Polymeren wurden in 150 Gt N-Methylpyrrolidon gelöst, mit 5,9 Gt Phthalsäureanhydrid und 0,5 Gt Triethylamin versetzt. Diese Lösung wurde 6 Stunden bei 80 °C gerührt. Nach Abkühlen auf Raumtemperatur wurde das Polymere aus Wasser gefällt und getrocknet. Es hatte die Säurezahl 39. 18,6 Gt dieses Polymeron wurden mit 2,01 Gt des bei I verwendeten Styrylpyridiniumsalzes analog zur obigen Acetalisierungsvorschrift umgesetzt. Das gefällte Polymerisat enthielt 2,45 mol-% Styrylpyridiniumgruppen.

Polymere FF und GG

Wie bei I beschrieben, jedoch FF) mit 2,8 Gt, GG) mit 5,6 Gt N-Ethyl-4-(p-formylstyryl)-chinolinium-p-toluolsulfonat wurden Bindemittel hergestellt. Sie enthielten 2,1 bzw. 4,3 mol.-% Styrylchinoliniumgruppen.

Polymeres HH

Wie bei 1 beschrieben, jedoch mit 10 Gt des Polymeren G und 2,0 Gt N-Ethyl-4-[p-(2,2-dimethoxy-ethoxy)styryl]-pyridinium-p-toluolsulfonat wurde ein Polymeres hergestellt, das nach Ausfällen aus Wasser 1,2 mol.-% lichtvernetzbare Einheiten enthielt.

Polymeres II

Wie bei I beschrieben, jedoch mit 10 Gt des Polymeren F als Ausgangspolymeres und 1,2 Gt 1-Methyl4-[p-(2,2-dimethoxy-ethoxy)-styryl]-chinoliniumiodid anstelle des dort angegebenen Styrylpyridiniumsalzes wurde ein Bindemittel hergestellt, das nach dem Ausfällen aus Wasser 0,9 mol.-% lichtvernetzbare Einheiten enthielt.

Beispiel 1

Beschichtungslösungen aus

| | |
|---|---|
| 2,0 Gt | des Polymeren I und |
| 0,04 Gt | des in Tabelle 5 angegebenen Sensibilisators in |
| 40,0 Gt | Propylenglykolmonomethylether |

wurden auf 0,3 mm starke, in Salpetersäure elektrochemisch aufgerauhte, in Schwefelsäure anodisierte und mit einer 0,1 %igen wäßrigen Lösung von Polyvinylphosphonsäure nachbehandelte Aluminiumfolien derart aufgebracht, daß ein Trockenschichtgewicht von 1,65 g/m$^2$ erhalten wurde. Die so erhaltenen lichtempfindlichen Schichten wurden unter einem 13-stufigen Belichtungskeil mit Dichtestufen von 0,15 120 Sekunden mit einer Metallhalogenidlampe von 5 kW Leistung im Abstand von 110 cm belichtet. Die Entwicklung erfolgte mit einer Entwicklerlösung folgender Zusammensetzung durch Reiben mit einem Plüschtampon:

| | |
|---|---|
| 5,0 Gt | Natriumoctylsulfat, |
| 1,5 Gt | Natriummetasilikat x 5 $H_2O$ und |
| 1,0 Gt | Dinatriumhydrogenphosphat x 12 $H_2O$ in |
| 92,5 Gt | dest. Wasser. |

Die nichtbelichteten Schichtbereiche wurden innerhalb 10 Sekunden sauber entfernt. Die Platte wurde anschließend mit Wasser abgespült. In der Kopie war die in Tabelle 5 angegebene Stufe des Silberfilm-Halbtonstufenkeils voll abgebildet. Auch feinste Raster und Linien der Vorlage waren klar wiedergegeben.

Tabelle 5

| Versuch Nr. | Sensibilisator | Keilstufe |
|---|---|---|
| 1 | Eosin alkohollöslich (C.I. 45 386) | 8 |
| 2 | 3,3′-Carbonyl-bis-(7-diethylaminocumarin) | 7 |
| 3 | 2-Benzoylmethylen-3-methyl-naphthothiazolin | 8 |
| 4 | Kirstallviolett (C.I. 42555) | 8 |
| 5* | Farbstoff Stains all (CAS 7423-31-6) | 7 |
| 6* | Strains all und 3,3′-Carbonyl-bis-(7-diethylamino-cumarin) 1 : 1 | 9 |

* In diesen Fällen wurde als Lösemittel ein Gemisch aus 30 Gt Propylenglykolmonomethylether und 10 Gt eines Gemischs aus 60 Vt Butyrolacton, 30 Vt Methanol und 10 Vt Butylacetate (85 %) eingesetzt.

Beispiel 2

Eine Beschichtungslösung aus

| | |
|---|---|
| 1,7 Gt | des Polymeren K, |
| 1,28 Gt | des in Tabelle 6 angegebenen Monomeren, |
| 0,068 Gt | 2,4-Bis-trichlormethyl-6-(4-styryl-phenyl)-s-triazin und |
| 0,017 Gt | des in Beispiel 1, Versuch 2 angegebenen Farbstoffs in |
| 42,5 Gt | 2-Methoxy-ethanol |

wurde auf den Träger aus Beispiel 1 zu einem Trockenschichtgewicht von 1,8 g/m$^2$ aufgebracht. Die Platte wurde 15 Sekunden unter einer Standard-Negativvorlage wie in Beispiel 1 belichtet. Die Entwicklung erfolgte wie in Beispiel 1. Die Platte wurde anschließend mit Wasser abgespült. In der Kopie war die in Tabelle 6 angegebene Stufe des Halbton-Stufenkeils voll abgebildet

Tabelle 6

| Versuch Nr. | Monomeres | Keilstufe |
|---|---|---|
| 1 | Reaktionsprodukt von 1 mol 2,2,4-Trimethyl-hexamethylendiisocyanat mit 2 mol Hydroxyethylmethacrylat | 4 |
| 2 | Trimethylolpropantriacrylat | 5 |
| 3 | Trimethylolpropantrimethacrylat | 5 |
| 4 | Pentaerythrittriacrylat | 7 |
| 5 | technisches Gemisch aus Pentaerythrittri- und -tetraacrylat | 7 |

Beispiel 3

| | |
|---|---|
| Aus 2,2 Gt | des Polymeren L, |
| 1,4 Gt | eines technischen Gemischs aus Pentaerythrittri- und -tetraacrylat, |
| 0,08 Gt | des in Tabelle 7 angegebenen Photoinitiators und |
| 0,04 Gt | 3,3′-Carbonyl-bis-(7-diethylaminocumarin) in |
| 50 Gt | 2-Methoxy-ethanol |

wurde eine Lösung bereitet, die auf eine in Salzsäure elektrolytisch aufgerauhte, in Schwefelsäure anodisierte und mit Polyvinylphosphonsäure nachbehandelte Aluminiumplatte so aufgebracht wurde, daß ein Trockenschichtgewicht von 2,0 g/m$^2$ erhalten wurde. Nach einer Belichtungszeit von 20 Sekunden wurden die nicht belichteten Schichtbereiche mit einer Entwicklerlösung folgender Zusammensetzung entfernt:

| | |
|---|---|
| 5,0 Gt | Natriumoctylsulfat, |
| 1,5 Gt | Natriummetasilikat x 5 $H_2O$ und |
| 1,0 Gt | Trinatriumphosphat x 12 $H_2O$ und |
| 0,5 Gt | Dinatriumhydrogenphosphat x 12 $H_2O$ in |
| 92,5 Gt | dest. Wasser. |

Die jeweils durchgehärteten Stufen des Halbtonstufenkeils sind in Tabelle 7 aufgeführt.

Tabelle 7

| Versuch Nr. | Photoinitiator | Keilstufe |
|---|---|---|
| 1 | 1,2-Benzanthrachinon | 4 |
| 2 | 2-(4-Trichlormethyl-benzoylmethylen)-3-ethyl-benzthiazolin | 9 |
| 3 | N-p-Chlorbenzoyl-4,5-diphenyl-2-o-chlorphenyl-imidazol | 7 |
| 4 | 2-(p-Trichlormethyl-benzoyl)-pyrazoanthron | 6 |
| 5 | Isopropylthioxanthon (Quantacure ITX) | 2 |
| 6 | 2,5-Bis-(4-diethylamino-phenyl)-1,3,4-oxdiazol | 3 |
| 7 | 2,4-Bis-trichlormethyl-6-(4-styrylphenyl)-s-triazin | 9 |

Beispiel 4

| | |
|---|---|
| Aus 1,7 Gt | des Polymeren M, |
| 1,28 Gt | Pentaerythrittriacrylat, |
| 0,068 Gt | des in Beispiel 2 angegebenen Triazins und |
| 0,017 Gt | des in Beispiel 1, Versuch 2, angegebenen Cumarinfarbstoffs in |
| 42,5 Gt | 2-Methoxy-ethanol |

wurde eine Beschichtungslösung hergestellt und auf den in Beispiel 1 beschriebenen Träger aufgebracht. Das Trockenschichtgewicht betrug 1,8 g/m². Belichtet wurde 10 Sekunden mittels einer 5-kW-Metallhalogenidlampe im Abstand von 110 cm unter dem in Beispiel 1 angegebenen Belichtungskeil. Nach der Belichtung wurde die Platte mit dem Entwickler aus Beispiel 3 entwickelt. Die nichtbelichteten Schichtbereiche wurden innerhalb kurzer Zeit nach der Benetzung durch die Entwicklerflüssigkeit entfernt. Anschließend wurde mit Wasser gespült und getrocknet. In der Kopie war die Stufe 4 voll abgebildet. Auch feinste Raster und Linien der Vorlage waren klar wiedergegeben.

Auf die oben hergestellte Druckplatte wurde eine Schicht von Polyvinylalkohol (12 % Restacetylgruppen, K-Wert 4) so aufgebracht, daß ein Trockenschichtgewicht von 0,8 g/m² erhalten wurde. Durch das Aufbringen der Sauerstoffsperrschicht wurde die Durchhärtungsgeschwindigkeit der lichtempfindlichen Schicht überraschenderweise nur wenig beeinflußt. Bei gleicher Belichtungszeit und Entwicklung war die Stufe 5 voll durchgehärtet.

Beispiel 5

Die in Beispiel 4 hergestellten Druckplatten mit und ohne Deckschicht wurden nach der Belichtung eine Minute auf 100 °C erwärmt und anschließend entwickelt.

In beiden Fällen war im Halbtonstufenkeil jeweils nur eine weitere Stufe voll durchgehärtet.

Beispiel 6

Beschichtungslösungen wurden wie in Beispiel 2, aber mit jeweils einem der Polymeren N bis S und Pentaerythrittriacrylat als Monomerem hergestellt und auf den Träger aus Beispiel 1 so aufgebracht, daß ein Trockenschichtgewicht von 1,85 g/m² erhalten wurde. Die lichtempfindliche Schicht wurde unter einer Standard-Negativvorlage wie in Beispiel 1 15 s belichtet und mit der folgenden Entwicklerlösung entwickelt:

| | |
|---|---|
| 5,0 Gt<br>1,5 Gt<br>1,5 Gt<br>92,0 Gt | Natriumoctylsulfat,<br>Natriummetasilikat x 5 $H_2O$ und<br>Trinatriumphosphat x 12 $H_2O$ in<br>dest. Wasser. |

Tabelle 8 zeigt die erhaltene Anzahl durchgehärteter Keilstufen.

Tabelle 8

| Polymeres | Styrylpyridiniumgruppen mol-% | Keilstufen |
|---|---|---|
| N | 2,4 | 5 |
| O | 3,3 | 6 |
| P | 4,8 | 7 |
| Q | 5,3 | 8 |
| R | 8,0 | 8 |
| S | 11,1 | 7 |

Die Lichtempfindlichkeit ist durch Erhöhung des Gehalts an Styrylpyridiniumgruppen nicht beliebig zu steigern, da die Salzgruppen auch die Löslichkeit des Polymeren erhöhen und damit zu einer leichteren Entwickelbarkeit der Schicht führen.

Beispiel 7

Die Polymeren T bis W wurden in der folgenden Lösung eingesetzt:

| | |
|---|---|
| 2,28 Gt | Pentaerythrittriacrylat, |
| 2,28 Gt | Polymeres, |
| 0,20 Gt | 2-(4-Trichlormethyl-benzoylmethylen)-3-ethyl-benzthiazolin und |
| 0,15 Gt | 3-Benzoylmethylen-3-methyl-naphthothiazolin |
| in | |
| 90,0 Gt | 2-Methoxy-ethanol. |

Die Lösungen wurden wie in Beispiel 4 auf den Träger aus Beispiel 1 aufgebracht (Schichtgewicht: 1,9 g/m$^2$). Belichtung (10 s) und Entwicklung erfolgten ebenfalls wie in Beispiel 1. Die Ergebnisse werden in Tabelle 9 beschrieben.

Tabelle 9

| Polymeres | Styrylpyridiniumgruppen mol.-% | Keilstufen |
|---|---|---|
| T | 2,9 | 8 |
| U | 2,7 | 7 |
| V | 3,1 | 4 |
| W | 2,9 | 6 |

Beispiel 8

Die Polymeren X und Y wurden in der folgenden Beschichtungslösung eingesetzt:

2,0 Gt Polymeres,
0,02 Gt 3,3'-Carbonyl-bis-(7-diethylamino-cumarin) und
0,08 Gt des in Beispiel 7 angegebenen Benzthiazolins
in
70,0 Gt 2-Methoxy-ethanol.

Die Lösungen wurden auf den Träger aus Beispiel 1 aufgeschleudert (Schichtgewicht: 1,85 g/m$^2$). Anschließend wurden die lichtempfindlichen Schichten 15 Sekunden belichtet und mit dem Entwickler aus Beispiel 6 entwickelt. In der Kopie war im Falle des Polymeren X die Stufe 5, bei Verwendung des Polymeren Y die Stufe 6 des Halbtonstufenkeils noch voll wiedergegeben. Auf die Druckplatte mit dem Polymeren Y wurde wie in Beispiel 4 eine Sauerstoffsperrschicht aufgebracht. Belichtet und entwickelt wurde wie oben beschrieben. In der Kopie war die Stufe 8 des Halbtonstufenkeils noch voll wiedergegeben.

Beispiel 9

Die Polymeren Z und AA wurden in einer Lösung entsprechend Beispiel 8 eingesetzt und auf den Träger aus Beispiel 1 zu einem Trockenschichtgewicht von 1,9 g/m$^2$ aufgebracht. Die Schichten wurden 10 Sekunden belichtet und mit dem Entwickler aus Beispiel 3 entwickelt. Bei Verwendung des Polymeren Z war die Stufe 5 und bei AA die Stufe 6 des Halbtonstufenkeils voll gedeckt.

Beispiel 10

In der Beschichtungslösung gemäß Beispiel 8 wurde das Polymere durch die gleiche Menge des Polymeren BB ersetzt und die Lösung wie in Beispiel 8 zur Herstellung einer Druckplatte eingesetzt. Nach 8 Sekunden Belichtung und Entwickeln mit dem Entwickler von Beispiel 6 war in der Kopie die Stufe 6 voll gedeckt. Wenn auf eine gleiche Druckplatte eine Sauerstoffsperrschicht aufgebracht wurde, wurde die gleiche Stufenzahl bereits bei 3 Sekunden Belichtung erreicht.

Beispiel 11

| | |
|---|---|
| Aus 2,5 Gt | des Polymeren L, |
| 0,86 Gt | eines Diazoniumsalz-Polykondensationsprodukts aus 1 mol 3-Methoxy-diphenylamin-4-diazoniumsulfat und 1 mol 4,4'-Bis-methoxymethyl-diphenylether, isoliert als Mesitylensulfonat, |
| 0,1 Gt | Phosphorsäure (85 %ig), |
| 0,03 Gt | Phenylazodiphenylamin und |
| 0,13 Gt | Viktoriareinblau FGA (C.I. Basic Blue 81) |
| in 40,0 Gt | 2-Methoxy-ethanol |

wurde eine Lösung hergestellt, die auf den in Beispiel 1 angegebenen Träger aufgetragen und zu einem Schichtgewicht von 1,0 g/m$^2$ getrocknet wurde. Die Schicht wurde durch eine Negativvorlage 30 Sekunden belichtet und mit dem Entwickler aus Beispiel 3 entwickelt. In der Druckplatte war die Stufe 4 des Belichtungskeils voll durchgehärtet. Die Entwickelbarkeit war gegenüber bekannten Druckplatten gleicher Art erheblich erleichtert.

Beispiel 12

| | |
|---|---|
| Aus 1,56 Gt | des Polymeren I, |
| 0,91 Gt | des in Beispiel 11 angegebenen Diazoniumsalz-Polykondensationsprodukts, |
| 0,049 Gt | Phosphorsäure (85 %ig), |
| 0,162 Gt | 2-(4-Methoxystyryl)-4,6-bis-trichlomethyl-s-triazin, |
| 1,75 Gt | eines technischen Gemischs aus Pentaerythrittri- und -tetraacrylat und |
| 0,55 Gt | Viktoriareinblau FGA in |
| 77,0 Gt | 2-Methoxy-ethanol |

wurde eine Lösung hergestellt, die auf eine elektrochemisch aufgerauhte, anodisierte und mit Polyvinylphosphonsäure behandelte Aluminiumfolie aufgetragen und zu einem Schichtgewicht von 1,9 g/m$^2$ getrocknet wurde. Die Schicht wurde durch eine Negativvorlage 35 Sekunden belichtet und mit dem Entwickler von Beispiel 1 entwickelt. In der Druckplatte war die Stufe 4 des Belichtungskeils voll durchgehärtet. Sie zeichnete sich im Vergleich zu mit herkömmlichen Bindemitteln hergestellten Druckplatten durch eine verbesserte Entwickelbarkeit aus.

Beispiel 13

Das Polymere CC wurde in der in Beispiel 4 beschriebenen Lösung eingesetzt. Das Schichtgewicht betrug 1,80 g/m$^2$. Nach 15 Sekunden Belichtung und Entwicklung mit der in Beispeil 3 beschriebenen Lösung wurde eine gedeckte Stufe 6 im Halbtonstufenkeil erhalten. Die Entwickelbarkeit dieser Platte war erheblich verbessert, so daß auch der 1 : 1 mit Wasser verdünnte Entwickler eine tonfreie Entwicklung erlaubte.

Beispiel 14

Das Polymere DD wurde wie in Beispiel 13 in einer Druckplatte eingesetzt. Man erhielt eine gedeckte Stufe 6 im Halbtonstufenkeil. Auch hier war die Entwickelbarkeit stark verbessert. Zur tonfreien Ent wicklung kann auch der mit Wasser im Verhältnis 1 : 1 verdünnte Entwickler eingesetzt werden.

Beispiel 15

Das Polymere EE wurde wie in Beispiel 13 in einer Druckplatte eingesetzt. Man erhielt eine gedeckte Stufe 4 des Halbtonstufenkeils. Die Entwickelbarkeit war so sehr erleichtert, daß bereits Teile der durchgehärteten Schicht mit dem Entwickler aus Beispiel 3 abgetragen wurden. Wenn man den mit Wasser im Verhältnis 1 : 1 verdünnten Entwickler anwendet, so erhält man eine gedeckte Stufe 6.

Beispiel 16

Die Polymeren FF und GG wurden in einer Lösung entsprechend Beispiel 3 ausgeprüft. Die Lösungen wurden auf den Träger aus Beispiel 1 zu einem Schichtgewicht von 1,87 g/m$^2$ aufgebracht. Die Belichtungszeit betrug 10 Sekunden, entwickelt wurde mit dem Entwickler aus Beispiel 6. Man erhielt Druckplatten, in denen die Stufe 4 (FF) bzw. die Stufe 5 (GG) voll gedeckt war.

Beispiel 17

Das Polymere HH wurde analog zu Beispiel 16 in einer Druckplatte eingesetzt. Man erhielt eine gedeckte Stufe 4.

Beispiel 18

Das Polymere II wurde in der Beschichtungslösung gemäß Beispiel 16 eingesetzt und wie dort verarbeitet. Es wurden 4 gedeckte Keilstufen erhalten.

## Ansprüche

1. Pfropfpolymerisat, bestehend aus einem polyurethan als pfropfgrundlage und aufgepfropften Ketten, die Vinylalkoholeinheiten und Einheiten mit seitenständigen Styrylpyridinium- oder Styrylchinoliniumgruppen enthalten.
2. Pfropfpolymerisat nach Anspruch 1, dadurch gekennzeichnet, daß die aufgepfropften Ketten ferner Vinylestereinheiten enthalten.
3. Pfropfpolymerisat nach Anspruch 1, dadurch gekennzeichnet, daß die aufgepfropften Ketten ferner vinylacetaleinheiten enthalten.
4. Pfropfpolymerisat nach Anspruch 3, dadurch gekennzeichnet, daß die Vinylacetaleinheiten von einem gesättigten aliphatischen oder cycloaliphatischen Aldehyd abgeleitet sind.
5. Pfropfpolymerisat nach Anspruch 1, dadurch gekennzeichnet, daß die Styrylpyridinium- bzw. Styrylchinoliniumgruppen enthaltenden Einheiten der allgemeinen Formel I

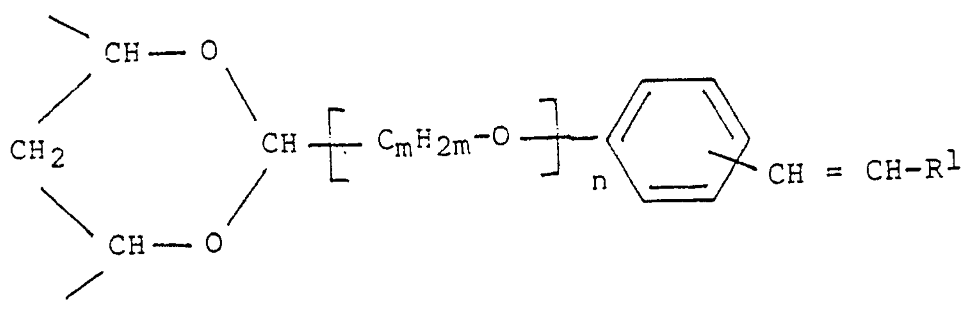

(I)

entsprechen, worin
$R^1$ eine der Gruppen

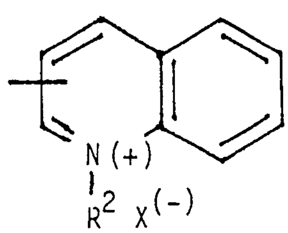

und

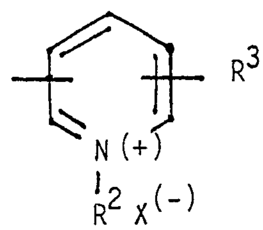

m eine Zahl von 1 bis 6,
n 0 oder 1,
$R^2$ H oder eine Alkyl-, Alkenyl- oder Aralkylgruppe,
$R^3$ H oder eine Alkylgruppe und
X das Anion der Stickstoffbase bedeutet.
6. Pfropfpolymerisat nach Anspruch 1, dadurch gekennzeichnet, daß das Polyurethan ein Polyadditionsprodukt aus Diisocyanaten und Diolen ist.
7. Pfropfpolymerisat nach Anspruch 1, dadurch gekennzeichnet, daß es zusätzlich Einheiten mit endständigen polymerisierbaren oder vernetzbaren Doppelbindungen enthält.
8. Pfropfpolymerisat nach Anspruch 7, dadurch gekennzeichnet, daß die Einheiten mit endständigen Doppelbindungen Acryloyl- oder Methacryloylreste enthalten.
9. Pfropfpolymerisat nach Anspruch 1, dadurch gekennzeichnet, daß es zusätzlich Einheiten mit Carboxyl- oder Sulfonylurethangruppen enthält.
10. Lichthärtbares Gemisch, das als wesentliche Bestandteile ein Polymeres mit ethylenisch ungesättigten

vernetzbaren Seitenketten und eine lichtempfindliche Substanz enthält, dadurch gekennzeichnet, daß das Polymere ein Pfropfpolymerisat gemäß einem der Ansprüche 1 bis 9 ist.

11. Lichthärtbares Gemisch nach Anspruch 10, dadurch gekennzeichnet, daß die lichtempfindliche Substanz eine Verbindung oder eine Verbindungskombination ist, die bei Bestrahlung mit aktinischem Licht die Vernetzung der ethylenisch ungesättigten Seitenketten einzuleiten oder zu sensibilisieren vermag.

12. Lichthärtbares Gemisch nach Anspruch 11, dadurch gekennzeichnet, daß es zusätzlich eine niedermolekulare ethylenisch ungesättigte radikalisch polymerisierbare Verbindung enthält und daß die lichtempfindliche Substanz eine Verbindung oder Verbindungskombination ist, die bei Bestrahlung mit aktinischem Licht die radikalische Polymerisation der ethylenisch ungesättigten Verbindung einzuleiten vermag.

13. Lichthärtbares Gemisch nach Anspruch 10, dadurch gekennzeichnet, daß die lichtempfindliche Substanz ein Diazoniumsalz-Polykondensationsprodukt ist.

14. Lichthärtbares Gemisch nach einem der Ansprüche 11 oder 12, dadurch gekennzeichnet, daß es 20 bis 90 Gew.-% Pfropfpolymerisat, 0,05 bis 20 Gew.-% Polymerisationsinitiator oder Sensibilisator und 0 bis 80 Gew.-% niedermolekulare polymerisierbare Verbindung enthält.

15. Lichthärtbares Aufzeichnungsmaterial mit einem Schichtträger und einer lichtempfindlichen Aufzeichnungsschicht, dadurch gekennzeichnet, daß die Schicht aus einem Gemisch gemäß einem der Ansprüche 10 bis 14 besteht.